# EUROPÄISCHE PATENTSCHRIFT

(11) **EP 0 743 478 B1**
(45) Veröffentlichungstag und Bekanntmachung des Hinweises auf die Patenterteilung: **16.08.2000**
(21) Anmeldenummer: 96106916.8
(22) Anmeldetag: 02.05.1996
(51) Int. Cl.: F16K 47/10

(54) **Hydraulisches Dämpfungsventil**
Hydraulic damping valve
Soupape d'amortissement hydraulique

(30) Priorität: 19.05.1995 DE 29508395 U
(43) Veröffentlichungstag der Anmeldung: 20.11.1996
(73) Patentinhaber: HEILMEIER & WEINLEIN Fabrik für Oel-Hydraulik GmbH & Co. KG, 81673 München (DE)
(72) Erfinder: Brunner, Rudolf, D-85598 Baldham (DE)
(74) Vertreter: Grünecker, Kinkeldey, Stockmair & Schwanhäusser Anwaltssozietät

(56) Entgegenhaltungen:
- EP-A- 0 056 423
- EP-A- 0 133 623
- EP-A- 0 333 640
- EP-A- 0 358 899
- DE-A- 1 500 019
- US-A- 2 924 237
- US-A- 4 125 129

## Beschreibung

Die Erfindung betrifft ein hydraulisches Dämpfungsventil der im Oberbegriff des Patentanspruchs 1 angegebenen Art.

Als hydraulische Dämpfungsventile einsetzbare Ventilkonzepte sind bekannt aus EP 0 363 409 B1, GB-A 003 336, US-A-2 924 237 und FR-A-1 580 794. In der einen Strömungsrichtung ist eine im wesentlichen ungedrosselte Durchströmung möglich, da der Rückschlagventilkörper von seinem Dichtsitz abgehoben wird. In der entgegengesetzten Strömungsrichtung sperrt der auf den Dichtsitz aufgedrückte Rückschlagventilkörper die direkte Durchströmung; es ist dann nur eine gedrosselte Strömung möglich, wobei unterschiedliche Drosseleinrichtungen verwendet werden.

Aus Technical Hydraulic Handbook, herausgegeben von Lee Company, USA, Ausgabe 1989, S. 48 und 49, sind Kaskadendrosseln bekannt, die in einer Druckmittelströmung mittels aufeinanderfolgend angeordneter, kaskadenartiger Drosselelemente wirken. Ein Vorteil solcher Kaskadendrosseln ist, daß sie weitestgehend viskositätsunabhängig drosseln und im besonderen für kleine Druckmittelmengen verwendbar sind, wie sie beispielsweise in Steuerdruckleitungen oder Steuerkreisen strömen.

Zum technologischen Hintergrund ist hinzuweisen auf: EP-A-0 056 429; US-A- 4 125 129; EP-A-0 133 623; DE-A-150 019 und EP-A-0 358 899.

In modernen Hubstaplern sollen in keinem Betriebszustand Druckschwingungen im Hydraulikkreis auftreten, da sie die Betriebsgefahr erhöhen. Gerade im Steuerkreis eines Hubmoduls eines Hubstaplers müssen Druckschwingungen auch dann zuverlässig gedämpft werden, wenn sich nur geringe Steuerdruckmittelmengen bewegen, verglichen mit den großen Arbeitsdruckmittelmengen. An sich müßten zur Dämpfung des Steuerdruckmittels beispielsweise Drosselbohrungen mit nur 0,1 mm Durchmesser benutzt werden. Diese sind herstellungstechnisch jedoch kaum zu realisieren. Es besteht ein Bedarf nach einem Dämpfungsventil, das in einer Strömungsrichtung im wesentlichen ungedrosselt durchströmbar ist, in der entgegengesetzten Strömungsrichtung hingegen stark dämpft, und zwar auch bei kleinen Druckmittelmengen. Das Dämpfungsventil soll kompakt und einfach herstellbar und universell einsetzbar sein, auch für andere Anwendungszwecke in der Hochdruckhydraulik.

Der Erfindung liegt die Aufgabe zugrunde, ein hydraulisches Dämpfungsventil der eingangs genannten Art zu schaffen, das einfach herzustellen ist, und das in der gedrosselten Strömungsrichtung bei kleinen Druckmittelmengen eine hohe Dämpfung leistet.

Die gestellte Aufgabe wird erfindungsgemäß mit dem Dämpfungsventil gemäß Patentanspruch 1 gelöst.

Die in den Rückschlagventilkörper integrierte Kaskadendrossel leistet die gewünscht hohe Dämpfung auch bei kleinen Druckmittelmengen. Das Dämpfungsventil ist kompakt, läßt sich einfach herstellen, und wird in Öffnungsrichtung des Rückschlagventilkörpers ungedrosselt durchströmt.

Die Ausführungsform gemäß Anspruch 2 ist baulich einfach. Das Außengehäuse wird in vorbestimmter Einbaulage eingesetzt. Die Kaskadenkapsel läßt sich in zwei zueinander umgekehrten Einbaulagen einsetzen und arbeitet dann mit jeweils einen Ventilsitz zusammen. Es läßt sich die ungedrosselte Durchströmrichtung nur durch Umkehren der Einbaulage der Kaskadenkapsel umstellen.

Alternativ ist die Ausführungsform gemäß Anspruch 3 universell einsetzbar, bei der das Außengehäuse wahlweise in einer von zwei zueinander umgekehrten Lagen in einen Druckmittelkanal eingesetzt wird, um jeweils die ungedrosselte Durchströmrichtung zu wählen.

Bei der Ausführungsform gemäß Anspruch 4 wird der Drosseleffekt durch die Kaskadenelemente erzeugt, die von beiden Richtungen her ungedrosselt angeströmt werden. Dies erfaßt einen starken und vorherbestimmbaren Dämpfungs- bzw. Drosseleffekt in jeder Strömungsrichtung.

Baulich einfach ist die Ausführungsform gemäß Anspruch 5. Das Dämpfungsventil ist in Durchmesserrichtung kompakt. Die Dichtwirkung des Rückschlagventilkörpers in der Absperrstellung ist gut. Der Stopfen in der Kaskadenkapsel positioniert bzw. verspannt die Kaskadenelemente.

Montagetechnisch ist die Ausführungsform gemäß Anspruch 6 einfach. Die zylindrische Bohrung nimmt die Blendenplättchen auf, die sich einfach einsetzen lassen.

Wichtig ist die Ausführungsform gemäß Anspruch 7, da unvermeidbare Verschmutzungen im Druckmittel bereits im jeweils ersten Blendenplättchen hängen bleiben. Die ersten Blendenplättchen übernehmen somit eine Filterfunktion. Es können mehr als nur das erste Blendenplättchen mit mehreren Durchbohrungen versehen sein. Mit dieser Maßnahme wird auch bei starker Drosselung einer nur kleinen Druckmittelmenge das Zulegen des gedrosselten Strömungsweges vermieden.

Bei der Ausführungsform gemäß Anspruch 8 wird der Strömungsweg nach außen durch die Kappe abgedichtet. Die Montage ist einfach.

Bei der Ausführungsform gemäß Anspruch 9 ist die Handhabung einfach. Der Querkanal ermöglicht die ungedrosselte Durchströmung und den Fluß des zu drosselnden Druckmittels in die Kaskadendrossel.

Bei der Ausführungsform gemäß Anspruch 10 wird baulich einfach ein weitgehend ungedrosselter Strömungsweg vom Außenquerschnitt der Kaskadenkapsel bereitgestellt, die von profiliertem Stangenmaterial abgelängt sein kann.

Die gemäß Anspruch 11 vorgesehenen Führungsabschnitte sichern das saubere Aufsetzen des Dichtendes auf dem Ventilsitz.

Bei der Ausführungsform gemäß Anspruch 12 bildet das Dämpfungsventil einen universell einsetzbaren Einschraubventileinsatz mit umkehrbarer Drosselrichtung.

Bei der Ausführungsform gemäß Anspruch 13 läßt sich das Dämpfungsventil auch in einem durchgehenden Druckmittelkanal oder zwischen Leitungsverbindungselementen einsetzen, und zwar mit umstellbarer Drosselrichtung.

Anhand der Zeichnung werden Ausführungsbeispiele des Erfindungsgegenstandes erläutert. Es zeigen:
- Fig. 1: einen Längsschnitt durch eine erste Ausführungsform eines Dämpfungsventils,
- Fig. 2: das Dämpfungsventil von Fig. 1 nach einer Umstellung, und
- Fig. 3: einen schematischen Längsschnitt einer weiteren Ausführungsform.

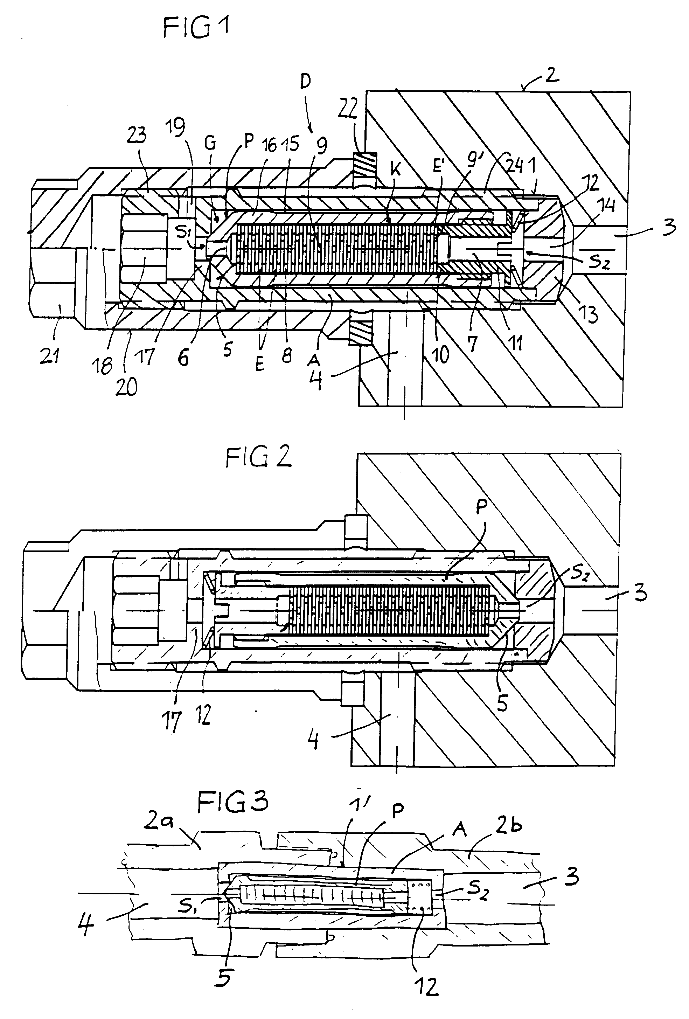

Ein hydraulisches Dämpfungsventil D gemäß Fig. 1 ist als Einschraub-Ventileinsatz in eine Aufnahmebohrung 1 einer hydraulischen Komponente 2 eingeschraubt, und zwar wirkungsmäßig zwischen Strömungswegen 3 und 4. Es wird eine Druckmittelströmung von 3 nach 4 stark gedrosselt; eine entgegengesetzte Druckmittelströmung ist ungedrosselt. Das Dämpfungsventil D ist ein Rückschlag-Drosselventil, das in der Sperrstellung nur einen gedrosselten Strom gestattet, und zwar bevorzugt einer nur kleinen Druckmittelmenge (z.B.Steueröl).

In die Aufnahmebohrung 1 ist ein Außengehäuse A mit einem vorderen Außengewindeabschnitt 24 eingeschraubt. Das Außengehäuse A ist hohl und steht mit einem vorderen Boden 13 an einer Schulter der Aufnahmebohrung 1 an. Der Boden 13 wird von einem Längskanal 14 durchsetzt und bildet einen im Inneren des Außengehäuses A liegenden Ventilsitz S2. Am anderen Ende des Außengehäuses A ist eine Querwand 17 vorgesehen, in der eine Durchgangsbohrung und ein Ventilsitz S1 vorgesehen sind. Das Außengehäuse besitzt nahe seinem anderen Ende einen weiteren Außengewindeabschnitt 23. Zwischen den Außengewindeabschnitten 23 und 24 führt wenigstens ein radialer Kanal 19 nach außen. Ferner ist eine Drehwerkzeugaufnahme 18 eingeformt. Auf den Außengewindeabschnitt 23 ist eine Kappe 20 mittels einer Handhabe 21 aufgeschraubt, die über eine Dichtung 22 gegenüber der Komponente 2 abdichtet und mit dem Außengehäuse A einen ungedrosselten Strömungsweg zum Kanal 4 definiert.

Im Inneren des Außengehäuses A ist ein Rückschlagventilkörper G vorgesehen, der als Kaskadenkapsel P ausgebildet ist und ein, z.B. und wie bei dieser Ausführungsform gezeigt, kegeliges Dichtende 5 aufweist, das mit dem Dichtsitz S1 zusammenarbeitet. Die Kaskadenkapsel P hat einen polygonalen Außenquerschnitt 15, z.b. in Sechseckform, und vordere und hintere Führungsabschnitte 16, mit denen sie im Außengehäuse A verschiebbar geführt ist.

Die Kaskadenkapsel P weist eine innere Längsbohrung 10 auf, in der eine Kaskadendrossel K positioniert und mittels eines einen Längskanal 7 aufweisenden Stopfens 11 festgelegt ist.

Die Kaskadenkapsel P wird durch eine Feder 12 in Richtung auf den Ventilsitz S1 beaufschlagt. Die Ventilschließfeder 12 stützt sich am Boden 13 ab.

Die Kaskadendrossel K besteht aus einer Vielzahl in etwa gleich großer und an den Innendurchmesser der Längsbohrung 10 angepaßter Blendenplättchen oder Kaskadenelemente E, zwischen denen Distanzringe 8 angeordnet sind. Jedes Blendenplättchen oder Kaskadenelement E enthält wenigstens eine kleine Durchbohrung 9. Zumindest die den Enden der Kaskadendrossel K zugewandten ersten Kaskadenelemente E' weisen mehrere kleine Durchbohrungen 9' auf. Im Dichtende 5 ist eine axiale Bohrung 6 vorgesehen.

In Fig. 1 ist die Verbindung von 3 nach 4 durch das mit dem Ventilsitz S1 zusammenwirkende Dichtende 5 abgesperrt. Druckmittel kann nur stark gedrosselt über die Bohrung 14, die Bohrung 7, die Kaskadendrossel K, und die Axialbohrung 6 durch den Ventilsitz S1 treten. Kehrt sich die Strömungsrichtung um, dann wird die Kaskadenkapsel P vom Ventilsitz S1 abgehoben, so daß das Druckmittel außen um die Kaskadenkapsel und im Außengehäuse A zur Bohrung 14 gelangt und dabei kaum gedrosselt wird.

In Fig. 2 ist die Einbaulage der Kaskadenkapsel P gegenüber der Einbaulage von Fig. 1 umgekehrt, d.h. das Dichtende 5 der Kaskadenkapsel P arbeitet mit dem anderen Dichtsitz S2 zusammen, während sich die Schließfeder 12 an der Querwand 17 abstützt. Durch Umkehren der Einbaulage der Kaskadenkapsel P wird somit die ungedrosselte Strömungsrichtung gegenüber Fig. 1 umgekehrt.

Bei der Ausführungsform der Fig. 1 und 2 könnte die Kappe 20 einstückig mit dem Außengehäuse ausgebildet werden und eine Strömungsverbindung zum Inneren des Außengehäuses A auf der Höhe des Kanals 4 vorgesehen sein. Ferner wäre es denkbar, das Außengehäuse so auszubilden, daß es sich zur Umkehr der Strömungsrichtung entweder mit dem Außengewindeabschnitt 24 oder dem Außengewindeabschnitt 23 in die Aufnahmebohrung 1 einschrauben läßt. Dann bräuchte die Kaskadenkapsel P zu einem Wechsel der ungedrosselten Durchströmungsrichtung nicht ausgebaut und umgesetzt zu werden.

Bei der Ausführungsform der Fig. 3 ist das Dämpfungsventil D in eine Druckmittelleitung 1' bzw. zwischen zwei Verbindungselemente 2a und 2b eingesetzt. Das Außengehäuse A ist mit Ventilsitzen S1 und S2 ausgebildet. Da das Außgengehäuse A symmetrisch sein kann, ist eigentlich nur ein Ventilsitz S1 notwendig, da die Einbaulage des Außengehäuses A umkehrbar ist. Denkbar ist es aber auch, das Außengehäuse mit zwei Ventilsitzen S1, S2 und teilbar auszubilden, um die Kaskadenpatrone P in zwei zueinander umgekehrten Einbaulagen einsetzen zu können. Das Außengehäuse A gemäß Fig. 3 könnte auch mit einem Außengewindeabschnitt versehen sein, um direkt in eine Durchgangsbohrung einer hydraulischen Komponente eingeschraubt zu werden.

Mit der Kaskadendrossel K wird eine sehr starke Drosselung erreicht, wobei die Kaskadenelemente E einfach herstellbar sind, Wie auch die kleinen Durchbohrungen 9, 9'. Ein Drosselkanal mit einer der Kaskadendrossel vergleichbar starken Drosselwirkung bräuchte einen Durchmesser von 1/10 mm oder weniger und wäre herstellungstechnisch schwierig zu realisieren.

## Patentansprüche

1. Hydraulisches Dämpfungsventil (D), insbesondere für kleine Druckmittelmengen, das in beiden Richtungen durchströmbar ist und einen mit wenigstens einem Ventilsitz (S1, S2) zusammenwirkenden Ventilkörper (G) aufweist, der in der einen Durchströmrichtung vom Ventilsitz (S1, S2) abhebbar ist und in der anderen Durchströmrichtung am Ventilsitz (S1, S2) anliegt und diesen bis auf einen im Ventil-Körper (G) vorgesehenen Drosseldurchgang absperrt, **dadurch gekennzeichnet,** daß der Ventilkörper (G) als Kaskadenkapsel (P) ausgebildet ist und eine Kaskadendrossel (K) mit mehreren Kaskadenelementen (E, E') enthält.

2. Dämpfungsventil nach Anspruch 1, **dadurch gekennzeichnet,** daß die Kaskadenkapsel (P) in einem Hohlraum eines Außengehäuses (A) in einer von zwei zueinander umgekehrten Einbaulagen angeordnet ist, daß an beiden Enden des Hohlraums je ein Ventilsitz (S1, S2) vorgesehen ist, daß die Kaskadenkapsel (P) je nach gewählter Einbaulage mit einem der Ventilsitze (S1, S2) zusammenarbeitet, und daß das Außengehäuse (A) mit vorbestimmer Einbaulage in einem Druckmittelkanal bzw. einer Aufnahmebohrung (1, 1') anbringbar ist.

3. Dämpfungsventil nach Anspruch 1, **dadurch gekennzeichnet,** daß die Kaskadenkapsel (K) mit vorbestimmter Einbaulage in einem Hohlraum eines Außengehäuses (A) angeordnet und zur Zusammenarbeit mit dem Dichtsitz (S1) im Außengehäuse (A) auf diesen ausgerichtet ist, und daß das Außengehäuse (A) wahlweise in zwei zueinander umgekehrten Einbaulagen in einen Druckmittelkanal bzw. eine Aufnahmebohrung (1, 1') einsetzbar ist.

4. Dämpfungsventil nach Anspruch 1, **dadurch gekennzeichnet,** daß die Kaskadenelemente (E, E') in einer Kammer (10) der Kaskadenkapsel (K) angeordnet sind, und daß zu der Kammer beidseitig großquerschnittige Kanäle (6, 7) ohne nennenswerten Drosseleffekt führen.

5. Dämpfungsventil nach Anspruch 4, **dadurch gekennzeichnet,** daß die Kaskadenkapsel (K) langgestreckt und beidendig offen ist und wenigstens ein kegeliges, balliges oder stumpfes und durchbohrtes äußeres Dichtende (5) aufweist, daß in das andere Ende der Kaskadenkapsel (K) ein, vorzugsweise durchbohrter, Stopfen (11) eingesetzt ist, und daß die Kaskadenelemente (E, E1) mittels des Stopfens (11) in der Kammer positioniert sind, vorzugsweise unter axialer Vorspannung.

6. Dämpfungsventil nach Anspruch 5, **dadurch gekennzeichnet,** daß die Kammer (10) eine zylindrische Längsbohrung der Kaskadenkapsel (K) ist, daß die Kaskadenelemente (E, E') etwa gleichgroße, scheibenförmige Blendenplättchen mit annähernd dem Durchmesser der Längsbohrung (10) entsprechendem Außendurchmesser und wenigstens einer kleinen Durchbohrung (9) sind, und daß zwischen den Blendenplättchen distanzhaltende Ringe (8) angeordnet sind.

7. Dämpfungsventil nach Anspruch 6, **dadurch gekennzeichnet,** daß zumindest das erste, ein Ende eines Pakets definierende Blendenplättchen (E') mit mehreren Durchbohrungen (9') versehen ist, deren Durchmesser in etwa den Durchmesser der Durchbohrungen (9) jedes weiter innen in dem Paket angeordneten Blendenplättchens (E) entspricht.

8. Dämpfungsventil nach Anspruch 2, **dadurch gekennzeichnet,** daß das Außengehäuse (A) ein Einschraubende und ein Außenende, jeweils mit einem Außengewindeabschnitt (23, 24), aufweist, und daß auf das Außenende des in eine Aufnahmebohrung (1) einer hydraulischen Komponente (2) eingeschraubten, daraus vorstehenden Außengehäuses (A) eine Kappe (20) aufgeschraubt ist, die dichtend, vorzugsweise unter Zwischenlage einer Dichtung (22), an der hydraulischen Komponente (2) anliegt.

9. Dämpfungsventil anch Anspruch 8, **dadurch gekennzeichnet,** daß im Außenende des Außengehäuses (A) eine Drehwerkzeugaufnahme (18) eingeformt ist, und daß wenigstens ein Querkanal (19) vorgesehen ist, der im Inneren des Außengehäuses (A) beginnt und außen zwischen den Außengewindeabschnitten (23, 24) endet.

10. Dämpfungsventil nach Anspruch 9, **dadurch gekennzeichnet,** daß die Kaskadenkapsel (K) außen einen polygonalen Querschnitt, vorzugsweise einen Sechskantquerschnitt, besitzt.

11. Dämpfungsventil nach wenigstens einem der Ansprüche 1 bis 10, **dadurch gekennzeichnet,** daß die Kaskadenkapsel (K) außen und nahe ihren beiden Enden Führungsabschnitte (16) aufweist.

12. Dämpfungsventil nach den Ansprüchen 1 und 2 oder 1 und 3, **dadurch gekennzeichnet,** daß das Dämpfungsventil (D) ein Einschraub-Ventileinsatz ist.

13. Dämpfungsventil nach den Ansprüchen 1 und 2 oder 1 und 3, **dadurch gekennzeichnet,** daß das Dämpfungsventil (D) eine in einen Druckmittelkanal oder zwischen Leitungsverbindungselemente (2a, 2b) einsetzbare Ventilpatrone ist.

## Claims

1. Hydraulic damping valve (D), in particular for small pressure-medium quantities, through which a flow can pass in both directions and which has a valve body (G) which cooperates with at least one valve seat (S1, S2) and which, in one throughflow direction, is capable of being lifted off from the valve seat (S1, S2) and, in the other throughflow direction, bears against the valve seat (S1, S2) and shuts off the latter, with the exception of a throttle passage provided in the valve body (G), characterized in that the valve body (G) is designed as a cascade capsule (P) and contains a cascade throttle (K) with a plurality of cascade elements (E, E').

2. Damping valve according to Claim 1, characterized in that the cascade capsule (P) is arranged in a cavity of an outer housing (A) in one of two mutually reversed installation positions, in that a valve seat (S1, S2) is provided at each of the two ends of the cavity, in that the cascade capsule (P) cooperates with one of the valve seats (S1, S2), depending on the selected installation position, and in that the outer housing (A) is capable of being mounted with a predetermined installation position in a pressure-medium duct or a receiving bore (1, 1').

3. Damping valve according to Claim 1, characterized in that the cascade capsule (K) is arranged with a predetermined installation position in a cavity of an outer housing (A) and, for the cooperation with the sealing seat (S1), is aligned with the latter in the outer housing (A), and in that the outer housing (A) is capable of being inserted selectively in two mutually reversed installation positions into a pressure-medium duct or a receiving bore (1, 1').

4. Damping valve according to Claim 1, characterized in that the cascade elements (E, E') are arranged in a chamber (10) of the cascade capsule (K), and in that ducts (6, 7) of large cross section lead to the chamber on both sides without any appreciable throttling effect.

5. Damping valve according to Claim 4, characterized in that the cascade capsule (K) is elongate and open at both ends and has at least one conical, convex or blunt and drilled-through outer sealing end (5), in that a preferably drilled-through plug (11) is inserted into the other end of the cascade capsule (K), and in that the cascade elements (E, E1) are positioned, preferably under axial prestress, in the chamber by means of the plug (11).

6. Damping valve according to Claim 5, characterized in that the chamber (10) is a cylindrical longitudinal bore of the cascade capsule (K), in that the cascade elements (E, E') are disc-shaped diaphragm wafers of about the same size, with an outside diameter corresponding approximately to the diameter of the longitudinal bore (10) and with at least one small throughbore (9), and in that spacer rings (8) are arranged between the diaphragm wafers.

7. Damping valve according to Claim 6, characterized in that at least the first diaphragm wafer (E'), defining one end of a stack, is provided with a plurality of throughbores (9'), the diameter of which corresponds approximately to the diameter of the throughbores (9) of each diaphragm wafer (E) arranged further inwards in the stack.

8. Damping valve according to Claim 2, characterized in that the outer housing (A) has a screw-in end and an outer end, in each case with an externally threaded portion (23, 24), and in that a cap (20) is screwed onto the outer end of the outer housing (A) which is screwed into a receiving bore (1) of a hydraulic component (2) and which projects from the latter, the said cap bearing on the hydraulic component (2) sealingly, preferably with a seal (22) being interposed.

9. Damping valve according to Claim 8, characterized in that a rotary tool holder (18) is integrally formed in the outer end of the outer housing (A), and in that at least one transverse duct (19) is provided, which commences inside the outer housing (A) and terminates on the outside between the externally threaded portions (23, 24).

10. Damping valve according to Claim 9, characterized in that the cascade capsule (K) possesses on the outside a polygonal cross section, preferably a hexagonal cross section.

11. Damping valve according to at least one of Claims 1 to 10, characterized in that the cascade capsule (K) has guide portions (16) on the outside and near its two ends.

12. Damping valve according to Claims 1 and 2 or 1 and 3, characterized in that the damping valve (D) is a screw-in valve insert.

13. Damping valve according to Claims 1 and 2 or 1 and 3, characterized in that the damping valve (D) is a valve cartridge capable of being inserted into a pressure-medium duct or between line connection elements (2a, 2b).

## Revendications

1. Soupape d'amortissement hydraulique (D), en particulier pour de faibles quantités d'agent sous pression, qui peut être balayée dans les deux sens et présente un corps de soupape (G) qui concourt avec au moins un siège de soupape (S1, S2), qui peut être décollé du siège de soupape (S1, S2) dans l'un des sens de passage, et qui s'applique dans l'autre sens de passage sur le siège de soupape (S1, S2), qu'il ferme jusqu'à un passage d'étranglement prévu dans le corps de soupape (G), caractérisée en ce que le corps de soupape (G) est réalisé sous forme de capsule en cascade (P) et comporte un étranglement en cascade (K) avec plusieurs éléments en cascade (E, E').

2. Soupape d'amortissement suivant la revendication 1, caractérisée en ce que la capsule en cascade (P) est disposée dans un espace creux d'une cage externe (A) dans l'une de deux positions de montage inversées l'une par rapport à l'autre, en ce qu'un siège de soupape (S1, S2) est respectivement prévu sur les deux extrémités de l'espace creux, en ce que la capsule en cascade (P) coopère avec l'un des sièges de soupape (S1, S2) suivant la position de montage respectivement choisie, et en ce que la cage externe (A) peut être mise en place avec une position de montage prédéfinie dans un conduit d'agent sous pression et/ou dans un trou de réception (1, 1').

3. Soupape d'amortissement suivant la revendication 1, caractérisée en ce que la capsule en cascade (K) est disposée avec une position de montage prédéfinie dans un espace creux d'une cage externe (A) et est alignée dans la cage externe (A) sur le siège d'étanchéité (S1) pour coopérer avec ce dernier, et en ce que la cage externe (A) peut être logée sélectivement dans deux positions de montage inversées l'une par rapport à l'autre dans un conduit d'agent sous pression et/ou un trou de réception (1, 1').

4. Soupape d'amortissement suivant la revendication 1, caractérisée en ce que les éléments en cascade (E, E') sont disposés dans un compartiment (10) de la capsule en cascade (K), et en ce que des conduits (6, 7) de section transversale élevée mènent de part et d'autre au compartiment sans effet d'étranglement notable.

5. Soupape d'amortissement suivant la revendication 4, caractérisée en ce que la capsule en cascade (K) est allongée et ouverte sur les deux extrémités, et présente au moins une extrémité d'étanchéité externe (5) conique, bombée ou tronquée et perforée, en ce qu'un bouchon (11), de préférence perforé, est logé dans l'autre extrémité de la capsule en cascade (K), et en ce que les éléments en cascade (E, E') sont positionnés dans le compartiment au moyen du bouchon (11), de préférence sous une tension initiale axiale.

6. Soupape d'amortissement suivant la revendication 5, caractérisée en ce que le compartiment (10) est un trou longitudinal cylindrique de la capsule en cascade (K), en ce que les éléments en cascade (E, E') sont des lamelles de diaphragme en forme de disque, de dimension à peu près égale, avec un diamètre externe correspondant à peu près au diamètre du trou longitudinal (10) et avec au moins une petite perforation (9), et en ce que des bagues d'écartement (8) sont disposées entre les lamelles de diaphragme.

7. Soupape d'amortissement suivant la revendication 6, caractérisée en ce qu'au moins la première lamelle de diaphragme (E'), définissant une extrémité d'un paquet, est munie de plusieurs perforations (9') dont le diamètre correspond à peu près au diamètre des perforations (9) de chaque lamelle de diaphragme (E) disposée plus à l'intérieur dans le paquet.

8. Soupape d'amortissement suivant la revendication 2, caractérisée en ce que la cage externe (A) présente une extrémité de vissage et une extrémité externe, respectivement avec une section filetée (23, 24), et en ce qu'un capuchon (20) est vissé sur l'extrémité externe de la cage externe (A), vissée dans un trou de réception (1) d'un composant hydraulique (2) et dépassant de ce dernier, le capuchon s'appliquant hermétiquement sur le composant hydraulique (2), de préférence par intercalation d'une garniture (22).

9. Soupape d'amortissement suivant la revendication 8, caractérisée en ce qu'un logement (18) pour un outil de vissage est conformé sur l'extrémité externe de la cage externe (A), et en ce qu'au moins un conduit transversal (19) est prévu, qui commence à l'intérieur de la cage externe (A) et s'achève à l'extérieur entre les sections filetées (23, 24).

10. Soupape d'amortissement suivant la revendication 9, caractérisée en ce que la capsule en cascade (K) présente à l'extérieur une section transversale polygonale, de préférence une section transversale hexagonale.

11. Soupape d'amortissement suivant l'une au moins des revendications 1 à 10, caractérisée en ce que la capsule en cascade (K) présente à l'extérieur et au voisinage de ses deux extrémités des sections de guidage (16).

12. Soupape d'amortissement suivant les revendications 1 et 2 ou 1 et 3, caractérisée en ce que la soupape d'amortissement (D) est un mécanisme de valve à vis.

13. Soupape d'amortissement suivant les revendications 1 et 2 ou 1 et 3, caractérisée en ce que la soupape d'amortissement (D) est une cartouche de soupape logeable dans un conduit d'agent sous pression ou entre des éléments de jonction de conduite (2a, 2b).
